# FASCICULE DE BREVET EUROPEEN

(11) **EP 2 336 525 B1**
(45) Date de publication et mention de la délivrance du brevet: **26.08.2015**
(21) Numéro de dépôt: 09180064.9
(22) Date de dépôt: 21.12.2009
(51) Int. Cl.: F02C 7/14, F02K 3/115

(54) **Intégration d'un échangeur de chaleur air-liquide sur moteur**
Einbau eines Luft-Flüssigkeits-Wärmetauschers in einen Motor
Integration of an air-liquid heat exchanger on an engine

(43) Date de publication de la demande: 22.06.2011
(73) Titulaire: Techspace Aero S.A., 4041 Herstal (Milmort) (BE)
(72) Inventeur: Bajusz, Denis, 4350, Remicourt (BE); Charlier, Jacques, 4890, Thimister-Clermont (BE); Raimarckers, Nicolas, 4263, Tourinne (Braives) (BE); Depaepe, David, 4000 Liege (BE)
(74) Mandataire: Lecomte, Didier

(56) Documents cités:
- EP-A1- 0 146 487
- FR-A1- 2 902 830
- GB-A- 2 270 118
- US-A- 5 269 135

## Description

### Domaine technique

L'invention a à l'intégration d'un échangeur de chaleur d'un circuit de lubrification et/ou de refroidissement d'une turbomachine axiale, plus particulièrement d'un turboréacteur, de manière à pouvoir assurer une de puissance de refroidissement satisfaisante.

### Technique antérieure

Différents éléments mécaniques ou électriques d'une turbomachine doivent être lubrifiés et/ou refroidis, comme par exemple certains roulements, certains réducteurs et les machines électriques. Pour ce faire, un circuit de lubrification est prévu. L'huile joue le rôle de lubrifiant et également de fluide caloporteur, ce qui nécessite de prévoir une évacuation de la chaleur ainsi récoltée. Les turboréacteurs actuels génèrent de plus en plus de calories notamment pour les raisons suivantes :
- chargement de plus en plus important des enceintes de paliers, notamment dans les moteurs dits « open rotor » équipés d'une double soufflante non carénée ;
- intégration de réducteurs de haute puissance, notamment dans les turbopropulseurs dits « Geared Turbofan », où l'on fait tourner la soufflante à une vitesse plus faible que le compresseur basse pression à des fins d'amélioration du rendement :
- l'intégration de nouveaux équipements comme par exemple les démarreurs-générateurs (starter/generators) de haute puissance.

Pour ces raisons, les échangeurs huile-carburant (FCOC pour Fuel cooling Oil cooling) sont saturés et exigent un complément de puissance de refroidissement via des échangeurs huile-air (ACOC pour Air cooled Oil cooler). Diverses solutions sont disponibles pour assurer l'approvisionnement en air froid de tels échangeurs comme, par exemple, l'utilisation d'une ou plusieurs écopes sur le carénage ce qui entraîne un accroissement de la traînée et une perturbation aérodynamique du flux du moteur et, partant, une baisse de rendement.

Le dimensionnement de ces échangeurs se fait pour des conditions de fonctionnement critiques qui correspondent généralement à un fonctionnement à bas régime du moteur où un certain niveau de puissance de refroidissement par air est requis compte tenu du très faible débit de carburant (autre source froide disponible) et où le débit d'air disponible est particulièrement faible.

Sur les moteurs modernes à double flux, un système de décharge du circuit primaire vers le circuit secondaire aux bas régimes permet de conserver la stabilité de fonctionnement des compresseurs basse pression et haute pression en évitant le phénomène de pompage. Ce système de décharge comprend hahituellement un système de vanne à ouverture variable permettant une fuite contrôlée depuis le flux primaire vers le flux secondaire (VBV pour Variable Bleed Valve).

Le document de brevet EP 0 146 487 A1 divulgue l'agencement d'un échangeur de chaleur air-huile (ACOC) disposé en déviation d'un passage de décharge entre le flux primaire et le flux secondaire d'un turboréacteur. Le débit de décharge est contrôlé par un dispositif mécanique à guillotine disposé dans un canal reliant la paroi du compresseur basse pression, à proximité de sa dernière rangée d'aubes rotoriques, avec la paroi délimitant la surface interne du flux secondaire. L'échangeur de chaleur est relié avec ce canal sous forme de piquage en aval de la guillotine de manière à recevoir une partie du débit de décharge et, partant, de manière à assurer un refroidissement de l'huile du circuit de lubrification. Une est disposée entre le piquage de débit de décharge et l'échangeur de chaleur de manière à pouvoir contrôler la puissance de refroidissement. Cet agencement est intéressant dans la mesure où il permet d'assurer un complément de refroidissement de l'huile du circuit hydraulique. Il présente cependant l'inconvénient qu'un refroidissement n'est possible qu'en présence d'un débit de décharge qui est inexistant dans les hauts régimes puisqu'il représenterait une perte de rendement non nécessaire au fonctionnement des compresseur. De plus, ce dispositif présente des inconvénients d'un point de vue perte de charge compte tenu du piquage d'air et des sections de conduite. La puissance de refroidissement en est par conséquent réduite. La mise en place de l'échangeur de chaleur est également rendue difficile de par sa localisation.

Le document de brevet EP 0 511 770 A1 divulgue un dispositif similaire à celui du document précédent avec toutefois pour différence essentielle que l'échangeur de chaleur est disposé directement dans le canal de décharge, à proximité de la paroi délimitant la surface interne du flux secondaire. Un clapet au niveau de la paroi du compresseur permet de contrôler le débit de décharge. Ce dispositif présente l'avantage d'offrir une puissance de refroidissement plus importante que dans l'enseignement du document précédent. Par contre, bien que la puissance de refroidissement soit accrue, elle reste néanmoins limitée par le débit de décharge, existant uniquement aux bas régimes (où le rendement du moteur a moins d'importance).

Le document de brevet US 2007/0215326 A1 divulgue un échangeur de chaleur air-huile rétractable monté dans la paroi délimitant la surface interne du flux secondaire d'un turboréacteur. Il est disposé sensiblement plus en aval au niveau du compresseur haute pression et de la chambre de combustion. Ce montage n'est possible qu'à cet endroit de la machine en raison de l'encombrement qui y est associé. Une telle solution n'est pas adaptée à résoudre le problème de refroidissement de l'huile à bas régime car le flux secondaire est trop faible à bas régime que pour assurer un refroidissement satisfaisant. Bien que l'échangeur de chaleur décrit dans ce document permette de limiter les pertes de charge de chaque régime au minimum nécessaire au refroidissement de l'huile, il requiert un système d'actionnement mécanique coûteux en volume et masse. Le document de brevet US 5,269,135 divulgue une turbomachine axiale conforme au préambule de la revendication 1. Le document de brevet GB 2 270 118 A divulgue un dispositif de refroidissement de l'air d'un débit de décharge du flux primaire, le refroidissement étant assuré par un échangeur disposé sur la paroi délimitant la surface externe du flux secondaire.

### Résumé de l'invention

L'invention a pour objectif de proposer une solution au refroidissement de l'huile du circuit de lubrification d'une turbomachine, en particulier pour des points de fonctionnement de la machine à bas régime où le débit d'air disponible est faible tout en réduisant au maximum d'éventuelles pertes de rendement.

L'invention consiste en une turbomachine axiale double-flux comprenant :
un compresseur axial, le compresseur étant traversé par un flux dit primaire de la turbomachine ; une paroi entourant le compresseur et délimitant la surface interne d'un flux dit secondaire de la turbomachine ;
un passage apte à générer un débit de décharge contrôlé depuis le flux primaire dans le compresseur vers le flux secondaire, le passage débouchant dans la paroi délimitant la surface interne du flux secondaire ;
un circuit de lubrification et/ou de refroidissement à huile d'éléments de la turbomachine; un échangeur de chaleur destiné à refroidir l'huile du circuit de lubrification et disposé au moins partiellement directement dans le débit de décharge ; la turbomachine étant remarquable en ce que l'échangeur de chaleur est disposé dans le flux secondaire directement en aval de la jonction du passage de débit de décharge avec la paroi délimitant la surface interne du flux secondaire. L'échangeur de chaleur est disposé à proximité directe de la jonction du passage de débit de décharge avec la paroi délimitant la surface interne du flux secondaire et en aval de cette jonction de manière à être parcouru au moins partiellement directement par le débit de décharge tout en étant disposé dans le flux secondaire. La partie du débit de décharge du flux primaire parcourant l'échangeur de chaleur peut être de au moins 40%, préférentiellement au moins 50%, plus préférentiellement encore au moins 60%. Cette disposition originale de l'échangeur de chaleur permet de profiter du débit du flux secondaire aux hauts régimes et de complémenter celui-ci par le flux de décharge aux bas régimes, donnant donc une meilleure source froide aux cas dimensionnants de l'échangeur, ce qui requiert alors une plus petite surface d'échange, et génère donc moins de perturbation aérodynamique.
La distance entre l'échangeur de chaleur et la jonction sera réduite et dépendra du design général de l'échangeur de chaleur, de la jonction du passage de décharge avec la paroi délimitant la surface interne du flux secondaire et de cette paroi.

Selon un mode avantageux de l'invention, la sortie du passage de débit de décharge est inclinée par rapport à la paroi délimitant la surface interne du flux secondaire de manière à ce que l'axe principal dudit passage forme un angle de moins de 70°, préférentiellement 50°, avec ladite paroi, Cette mesure améliore l'écoulement aérodynamique au niveau de la jonction et surtout permet à l'échangeur de chaleur de récupérer une partie importante du débit de décharge à des fins de refroidissement.

Selon un autre mode avantageux de l'invention, l'échangeur de chaleur est du type surfacique avec une surface d'échange de chaleur généralement parallèle à la paroi délimitant la surface interne du flux secondaire, et l'échangeur de chaleur est disposé à plat sur ou au moins partiellement dans la paroi délimitant la surface interne du flux secondaire. Cette disposition est particulièrement simple, peu coûteuse, légère et efficace tant d'un point de vue aérodynamique que thermique.

Selon encore un autre mode avantageux de l'invention, l'échangeur de chaleur est au moins partiellement intégré dans la paroi délimitant la surface interne du flux secondaire de manière a ce que sa surface d'échange soit alignée avec ladite paroi. Préfèrentiellement c'est essentiellement la partie de l'échangeur formant le circuit d'huile qui est intégrée dans la paroi en question. Cette intégration a pour effet de minimiser la perturbation du flux secondaire.

Selon encore un autre mode avantageux de l'invention, l'échangeur de chaleur comporte des moyens de guidage du flux, les moyens de guidage formant préférentiellement un ou plusieurs canaux sur la surface d'échange de l'échangeur de chaleur. Cette mesure a pour effet d'augmenter la capacité d'échange de l'échangeur par l'emploi d'une surface d'échange plus optimisée (étant en zone protégée par la plaque supérieure, elle ne doit plus répondre à des critères de tenue aux impacts) et par un maintient du flux d'air refroidissant cette surface tout au long de l'échangeur.

Selon encore un autre mode avantageux de l'invention, les moyens de guidage du flux comprennent une paroi de guidage disposée à distance de la surface d'échange de l'échangeur de chaleur, des ailettes étant préférentiellement disposées entre la surface d'échange et la paroi de guidage. Cette construction des moyens de guidage est particulièrement simple, peu coûteuse et efficace.

Selon encore un autre mode avantageux de l'invention, la paroi de guidage est en saillie de l'échangeur de chaleur côté amont et disposée partiellement dans le flux de sortie du passage de débit de décharge de manière à guider au moins une partie du débit de décharge vers la surface d'échange de l'échangeur de chaleur.

Selon encore un autre mode avantageux de l'invention, l'échangeur de chaleur, la paroi de guidage et la paroi délimitant la surface interne du flux secondaire sont disposés de manière à ce que la paroi de guidage soit alignée avec la paroi délimitant la surface interne du flux secondaire,

Selon encore un autre mode avantageux de l'invention, la paroi délimitant la surface interne du flux secondaire présente un renfoncement à l'emplacement de l'échangeur de chaleur de sorte à ce que la paroi de guidage soit alignée avec la paroi délimitant la surface interne du flux secondaire en dehors du renfoncement.

Selon encore un autre mode avantageux de l'invention, la paroi de guidage est en saillie de l'échangeur de chaleur côté aval.

Selon un encore autre mode avantageux de l'invention, l'échangeur de chaleur comprend plusieurs surfaces d'échange de chaleur superposées généralement parallèles à là paroi délimitant la surface du flux secondaire.

Selon encore un autre mode avantageux de l'invention, l'échangeur de chaleur est du type surfacique avec au moins deux surfaces d'échange de chaleur opposées et parallèles, l'échangeur de chaleur étant disposé à distance de la paroi délimitant la surface interne du flux secondaire, de manière a ce que ses deux faces (côté veine secondaire et côté paroi) soient balayés par le flux d'air.

Selon encore un autre mode avantageux de l'invention, l'échangeur de chaleur est disposé dans l'alignement et la continuité de la paroi délimitant la surface interne du flux secondaire à proximité du côté amont de la jonction du passage de débit décharge avec ladite paroi, ladite paroi étant rabaissée côté aval de ladite jonction de manière à créer une section de passage pour le débit de décharge avec l'échangeur de chaleur.

Selon un encore autre mode avantageux de l'invention, la turbomachine comprend une pluralité d'échangeurs de chaleur et/ou de passages de débit de décharge, chacun desdits passages étant préférentiellement aligné avec un ou plusieurs desdits échangeurs de chaleur.

L'invention consiste également en un procédé de refroidissement de l'huile d'un circuit de lubrification et/ou de refroidissement d'une turbomachine axiale double flux au moyen d'un échangeur de chaleur, la turbomachine comprenant un compresseur axial, le compresseur étant traversé par un flux dit primaire de la turbomachine: une paroi entourant le compresseur et délimitant la surface interne d'un flux dit secondaire de la turbomachine; un passage apte à générer un débit de décharge contrôlé depuis le flux primaire dans le compresseur vers le flux secondaire, le passage débouchant dans la paroi délimitant la surface interne du flux secondaire; le procédé comprenant le fait de disposer l'échangeur de chaleur dans le débit de décharge du flux primaire; et remarquable en ce que le fait de disposer l'échangeur de chaleur comprend le fait de le disposer dans le flux secondaire en aval de la jonction du passage de débit de décharge avec la paroi délimitant la surface interne du flux secondaire.

Les caractéristiques avantageuses énoncées ci-avant pour la turbomachine s'appliquent également au procédé sus mentionné.

### Brève description des dessins

La figure 1 est une vue schématique d'une turbomachine axiale double-flux conforme à l'invention.

La figure 2 est une vue schématique illustrant un premier mode conforme à l'invention d'intégration d'un échangeur de chaleur dans la paroi délimitant la surface interne du flux secondaire.

La figure 3 est une vue schématique illustrant un deuxième mode conforme à l'invention d'intégration d'un échangeur de chaleur dans la paroi délimitant la surface interne du flux secondaire.

La figure 4 est une vue schématique d'un exemple de réalisation d'un échangeur de chaleur intervenant dans l'invention.

### Description des modes de réalisation

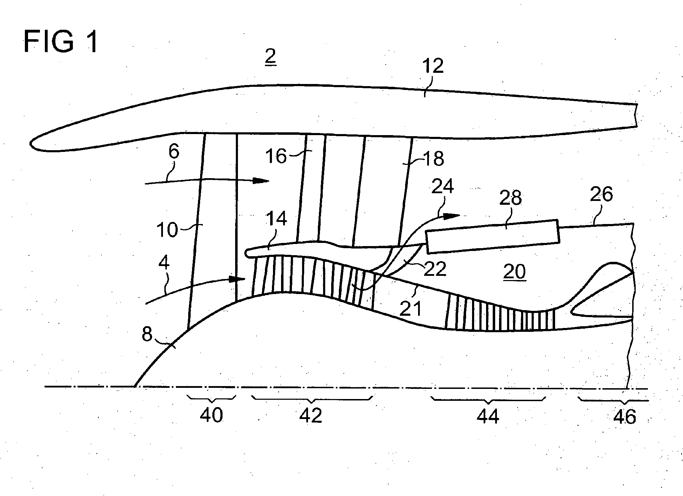

Un turboréacteur double flux 2 est illustré à la figure 1. On peut y distinguer les différentes parties principales, à savoir la partie soufflante ou « fan » 40 générant le flux primaire 4 et le flux secondaire 6, la partie compresseur basse pression 42, la partie compresseur haute pression 44 et la partie combustion 46. Le rotor 8 comporte un ventilateur ou « fan » 10 ainsi qu'une série d'aubes rotoriques des parties compresseur basse pression et haute pression. Un bec de séparation 14 divise le flux d'air en un flux primaire 4 traversant les étages de compression et en un flux secondaire 6 formant une veine fluide annulaire s'écoulant autour du flux primaire 4. Une paroi 26 dans le prolongement du bec de séparation délimite la surface interne du flux secondaire. Le bec 14 et cette paroi 26 sont reliés au carter extérieur 12 via les bras de maintien 16 et 18.

Le flux primaire suit une trajectoire non rectiligne mais bien ondulée. La veine primaire est de section annulaire de taille variable en fonction de la position dans les premier et deuxième compresseurs. La veine primaire se rétrécit depuis la sortie du premier compresseur basse pression jusqu'à l'entrée du deuxième compresseur haute pression. Cette géométrie réserve un certain volume 20 entre la paroi 21 délimitant la surface extérieure de la veine primaire et la paroi 26 délimitant la surface intérieure ou interne de la veine secondaire.

Un canal ou passage 22 traverse le volume 20 depuis la paroi 21 jusqu'à la paroi 26. Il relie le flux primaire depuis approximativement la sortie du compresseur basse pression au flux secondaire en aval de la jonction du canal 22 avec la paroi 21, dans le cas précis de la figure. 1, approximativement à hauteur du bras de maintien 18. De la sorte, le canal est incliné et présente un angle général avec la paroi 26 inférieur à 90° de manière à ce que le vecteur vitesse moyen du fluide rejoignant le flux secondaire ait une composante non négligeable dirigée selon la direction et le sens d'écoulement du flux secondaire. Cela favorise l'écoulement de décharge assuré par le canal 22, cet écoulement étant symbolisé par la flèche 24. Des moyens de contrôle et de régulation du débit de décharge passant par le canal 22 sont prévus mais non représentés. Ces moyens sont bien connus de l'homme de l'art et peuvent comprendre, à titre d'exemple, des moyens à clapet motorisé ou à commande hydraulique ou pneumatique. Ce système de décharge du flux primaire vers le flux secondaire permet de manière connue à la turbomachine fonctionnant à bas régimes de conserver une stabilité aérodynamique et d'éviter les phénomènes de pompage.

Un échangeur de chaleur surfacique 28 est intégré dans la paroi 26 directement après la jonction du canal 22 avec ladite paroi, et ce dans le sens d'écoulement du fluide. Cet échangeur de chaleur est du type air-huile ou encore ACOC (Air cooled Oil cooler) et est connecté au circuit de lubrification (non représenté) de la turbomachine. La disposition de l'échangeur de chaleur lui permet d'être parcouru en permanence par le flux secondaire tout en n'en perturbant que très peu l'écoulement, et d'être également parcouru par une grande partie du débit de décharge du flux primaire rejoignant le flux secondaire. Dans les conditions de fonctionnement les plus critiques du point de vue refroidissement, c'est-à-dire lorsque la turbomachine fonctionne à bas régime, l'échangeur de chaleur est parcouru par le flux secondaire enrichi par le flux de décharge. Il résulte de cet agencement une utilisation optimale des flux disponibles tout en ne les perturbant que très peu. Outre le fait que ces mesures assurent une capacité de refroidissement suffisante, elles autorisent également un dimensionnement réduit de l'échangeur de chaleur et, partant, un gain de poids non négligeable.

L'échangeur est préférentiellement du type plan ou surfacique c'est-à-dire présentant au moins une face ou surface correspondant essentiellement à la taille de l'échangeur et destinée à être parcourue par un fluide en mouvement en vue d'assurer un échange de chaleur. Ce type d'échangeur de chaleur est particulièrement bien adapté en vue d'un placement sur une paroi comme la paroi 26 délimitant la surface interne du flux secondaire. Il va sans dire que l'échangeur de chaleur 28 peut être légèrement courbé afin de se conformer à la paroi 26 qui est généralement cylindrique.

En fonction de divers paramètres de dimensionnement, plusieurs échangeurs de chaleur peuvent être disposés sur le pourtour de la paroi 26, préférentiellement de sorte que chaque échangeur soit généralement aligné avec un canal de décharge. On pourrait cependant imaginer que seulement certains des échangeurs répartis sur le pourtour de la paroi 26 soient disposés en face d'un canal de décharge, les autres n'étant parcourus essentiellement que par le flux secondaire. Il est également envisageable de prévoir moins d'échangeur de chaleur qu'il n'y a de canaux de décharge.

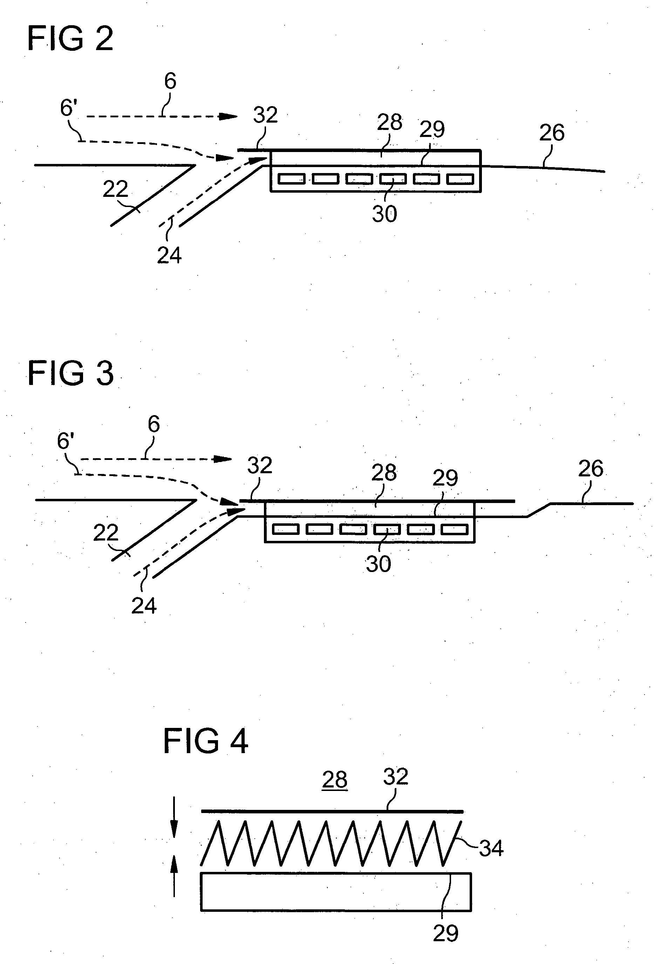

Un premier mode d'intégration de l'échangeur de chaleur 28 dans la paroi 26 est illustré de manière schématique à la figure 2. L'échangeur de chaleur surfacique 28 est généralement plan ou courbé afin de se conformer à la forme de la paroi 26. Il comporte dans l'épaisseur de sa matière une série de canaux 30 parcourus par à refroidir. Ces canaux peuvent prendre diverses formes, comme par exemple une série de canaux disposés en parallèle ou encore un canal continu formant un serpentin, ou une combinaison de ces disposions. L'échangeur de chaleur 28 est intégré ou encore « enterré » dans la paroi 26 de manière à ce que sa surface d'échange 29 soit approximativement alignée avec la surface extérieure de la paroi 26. L'échangeur de chaleur comporte une paroi de guidage 32 destinée à guider le flux rencontrant l'échangeur de chaleur de manière à assurer un écoulement satisfaisant le long de la surface d'échange 29. Cette paroi 32 est généralement parallèle à la paroi 26 et, partant, à la surface d'échange 29 de manière à former un canal d'écoulement le long de cette surface 29. La paroi de guidage 32 est en saillie de l'échangeur de chaleur du côté amont. Elle permet de capter et guider à la manière d'une écope une partie du flux secondaire 6 vers la surface d'échange 29. Cette partie du flux secondaire qui est captée est illustrée par la flèche 6'. Cette partie en saillie est disposée dans le faisceau de sortie du canal de décharge 22 afin de guider une partie du débit de décharge vers l'échangeur de chaleur. Pour ce faire, l'échangeur est disposé à proximité éventuellement immédiate de la jonction du canal 22 avec la paroi 26. En fonction de la proximité de l'échangeur de chaleur avec la jonction du canal 22 avec la paroi 26, la paroi de guidage 32 dépassera alors plus ou moins beaucoup du bord avant ou amont de l'échangeur de chaleur de manière à rencontrer partiellement le faisceau géométrique de sortie du canal de décharge 22. De la sorte une majeure partie du débit de décharge 24 est déviée vers l'échangeur de chaleur.

Un second mode d'intégration de l'échangeur de chaleur 28 dans la paroi 26 est illustré de manière schématique à la figure 3. Dans ce cas, la paroi 26 présente un renfoncement à l'endroit où l'échangeur de chaleur est disposé. Similairement au mode précédent illustré à la figure 2. l'échangeur de chaleur est intégré ou encastré dans la paroi 26, mais cette fois dans une partie renfoncée de la paroi 26. Similairement à l'échangeur de chaleur illustré à la figure 2, il est du type plan ou surfacique et comporte dans l'épaisseur de sa matière une série de canaux 30 parcourus par l'huile à refroidir. Il comporte une surface d'échange 29 correspondant essentiellement à la dimension de l'échangeur. Ce dernier est disposé dans la paroi 26 de manière à ce que la surface d'échange 29 soit alignée avec la partie renfoncée de la paroi. 26. Il est à noter que le renfoncement de la paroi 26 s'étend depuis la jonction du canal de décharge 22 avec la paroi 26 jusqu'à une certaine distance en aval, cette distance étant supérieure à la longueur de l'échangeur de chaleur 28. Similairement à la configuration de la figure 2, l'échangeur de chaleur comporte une surface de guidage 32 généralement parallèle à la paroi 26 et à la surface d'échange 29. Contrairement à la configuration de la figure 2, la surface d'échange est, cette fois, alignée avec la paroi 26 en dehors de son renfoncement. Cela revient à dire que la paroi 26 est renfoncée de manière à aligner la surface de guindage 32 avec la paroi délimitant la surface interne de la veine fluide du flux secondaire. La paroi de guidage 32 est en saillie de l'échangeur côté amont pour les mêmes raisons que dans la configuration de la figure 2. Cette partie en saillie est disposée dans le flux de sortie du canal de décharge 22 de manière à dévier une partie importante du débit de décharge 24 vers l'échangeur de chaleur. Elle doit cependant rester à distance de la paroi 26 côté amont de manière à permettre à une partie 6' du flux secondaire 6 d'être captée et déviée par cette partie en saillie de la paroi de guidage 32 vers l'échangeur de chaleur 28. La paroi de guidage 32 peut également être en saillie côté aval tout en restant à distance de la paroi 26 dans son alignement de manière à laisser une section de sortie pour le flux parcourant la surface d'échange 29. Ce mode d'intégration de l'échangeur de chaleur présente l'avantage d'encore moins perturber le flux secondaire par rapport au mode de la figure 1. La partie 6' de flux secondaire 6 qui est ainsi captée est cependant plus faible.

Le canal formé par la paroi de guidage peut comporter des parois de séparation de manière à former une série de canaux parallèles orientés selon la direction d'écoulement du flux secondaire. Il peut également comporter des ailettes en saillie de la surface d'échange 29. Ces ailettes peuvent être parallèles et unitaires avec le matériau de l'échangeur. Elles peuvent également être sous forme de tôle pliée en accordéon prise en sandwich entre la surface d'échange et la paroi de guidage, comme cela est illustré à la figure 4. La figure 4 est en effet une vue de face (selon la direction d'écoulement) de l'échangeur de chaleur 28. Une tôle pliée en accordéon 34 est brasée à la surface d'échange 29 de manière à servir d'ailettes, La tôle définit avec la surface d'échange 29 et la paroi de guidage 32 une série de canaux d'écoulement et de refroidissement. Cette mesure permet une augmentation de la capacité d'échange de l'échangeur de chaleur. La tôle 34 illustrée peut également être pliée autrement, comme par exemple suivant un profil ondulé ou tout autre profil apte à augmenter la capacité d'échange sans pour autant augmenter les pertes de charges associées.

Il est à noter que les modes d'intégration de l'échangeur de chaleur illustrés aux figures 2 et 3 sont purement exemplatifs. En effet, d'autres exécutions et dispositions de l'échangeur de chaleur sont envisageables. Par exemple, on pourrait prévoir un échangeur de chaleur particulièrement fin présentant deux surfaces d'échange opposées, cet échangeur étant disposé à distance de la paroi 26 similairement à la paroi de guidage 32 de manière à être parcouru par le flux secondaire sur sa face opposée à la paroi 36 et par une partie du flux secondaire enrichi du flux de décharge sur sa face en vis-à-vis de la paroi 26. Il est même envisageable de prévoir un tel échangeur de chaleur disposé dans l'alignement de la partie de paroi 26 située en amont de la jonction avec le canal de décharge 22, similairement à la paroi de séparation à la figure 3. L'échangeur pourrait d'ailleurs couvrir la totalité de la jonction du canal de décharge 22 avec la paroi 26 de manière à former un écran de séparation des flux secondaire et de décharge jusqu'à ce que ces deux flux se rejoignent à la sortie de l'échangeur. Une telle construction présente l'avantage d'avoir une capacité d'échange importante de par l'utilisation de deux surfaces d'échange mais impose certaines contraintes quant à l'épaisseur de l'échangeur de manière à perturber au minimum l'écoulement dans la veine secondaire.

## Revendications

1. Turbomachine axiale double-flux (2) comprenant :
un compresseur axial (42, 44), le compresseur étant traversé par un flux dit primaire (4) de la turbomachine ;
une paroi (26) entourant le compresseur (42, 44) et délimitant la surface interne d'un flux dit secondaire (6) de la turbomachine. ;
un passage (22) apte à générer un débit de décharge (24) contrôlé depuis le flux primaire (4) dans le compresseur vers le flux secondaire (6), le passage débouchant dans la paroi (26) délimitant la surface interne du flux secondaire (6) ;
un circuit de lubrification et/ou de refroidissement à huile d'éléments de la turbomachine ;
un échangeur de chaleur (28) destiné à refroidir l'huile du circuit de lubrification et disposé au moins partiellement directement dans le débit de décharge (24) du flux primaire ;
**caractérisée en ce que**
l'échangeur de chaleur (28) est disposé dans le flux secondaire directement en aval de la jonction du passage de débit de décharge (22) avec la paroi (26) délimitant la surface interne du flux secondaire.

2. Turbomachine axiale double-flux selon la revendication précédente, **caractérisée en ce que** la sortie du passage de débit de décharge (22) est inclinée par rapport à la paroi (26) délimitant la surface interne du flux secondaire de manière à ce que l'axe principal dudit passage forme un angle de moins de 70°, préférentiellement 50°, avec ladite paroi.

3. Turbomachine axiale double-flux selon l'une des revendications précédentes, **caractérisée en ce que** l'échangeur de chaleur est du type surfacique avec au moins une surface d'échange de chaleur (29) généralement parallèle à la paroi (26) délimitant la surface interne du flux secondaire et est disposé à plat sur ou au moins partiellement dans la paroi (26) délimitant la surface interne du flux secondaire.

4. Turbomachine axiale double-flux selon la revendication précédente, **caractérisée en ce que** l'échangeur de chaleur (28) est au moins partiellement intégré dans la paroi (26) délimitant la surface interne du flux secondaire de manière à ce que sa surface d'échange (29) soit alignée avec ladite paroi (26).

5. Turbomachine axiale double-flux selon l'une des revendications 3 à 4, **caractérisée en ce que** l'échangeur de chaleur (28) comporte des moyens de guidage (32) du flux, les moyens de guidage formant préférentiellement un ou plusieurs canaux avec la surface d'échange (29) de l'échangeur de chaleur.

6. Turbomachine axiale double-flux selon la revendication précédente, **caractérisée en ce que** les moyens de guidage du flux comprennent une paroi de guidage (32) disposée à distance de la surface d'échange (29) de l'échangeur de chaleur, des ailettes (34) étant préférentiellement disposées entre la surface d'échange (29) et la paroi de guidage (32).

7. Turbomachine axiale double-flux selon la revendication précédente. **caractérisée en ce que** la paroi de guidage (32) est en saillie de l'échangeur de chaleur (28) côté amont et disposée partiellement dans le flux de sortie du passage de débit décharge (22) de manière à guider au moins une partie du débit de décharge vers la surface d'échange (29) de l'échangeur dé chaleur (28).

8. Turbomachine axiale double-flux selon l'une des revendications 6 et 7, **caractérisée en ce que** l'échangeur de chaleur (28), la paroi de guidage (32) et la paroi (26) délimitant la surface interne du flux secondaire sont disposés de manière à ce que la paroi de guidage (32) soit alignée avec la paroi (26) délimitant la surface interne du flux secondaire.

9. Turbomachine axiale double-flux selon la revendication précédente, **caractérisée en ce que** la paroi (26) délimitant la surface interne du flux secondaire présente un renfoncement à l'emplacement de l'échangeur de chaleur (28) de sorte à ce que la paroi de guidage (32) soit alignée avec la paroi (26) délimitant la surface interne du flux secondaire en dehors du renfoncement.

10. Turbomachine axiale double-flux selon l'une des revendications 6 à 9, **caractérisée en ce que** la paroi de guidage (32) est en saillie de l'échangeur de chaleur (28) côté aval.

11. Turbomaschine axiale double-flux selon la revendication 3, **caractérisée en ce que** l'échangeur de chaleur (28) comprend plusieurs surfaces d'échange de chaleur superposées généralement parallèles à la paroi délimitant la surface interne du flux secondaire.

12. Turbomachine axiale double-flux selon la revendication 1, **caractérisée en ce que** l'échangeur de chaleur (28) est du type surfacique avec au moins deux surfaces d'échange de chaleur opposées et parallèles, l'échangeur ce chaleur étant disposé à distance de la paroi (26) délimitant la surface interne du flux secondaire.

13. Turbomachine axiale double-flux selon, la revendication précédente, **caractérisée en ce que** l'échangeur dé chaleur (28) est disposé dans l'alignement et la continuité de la poroi (26) délimitant la surface interne du flux secondaire à proximité du côté amont de la jonction du passage de débit décharge (22) avec ladite paroi (26), ladite paroi étant rabaissée côté aval de ladite jonction de manière à créer une section de passage pour le débit de décharge avec l'échangeur de chaleur.

14. Turbomachine axiale double-flux selon l'une des revendications précédentes, **caractérisée en ce qu'**elle comprend une pluralité d'échangeurs de chaleur (28) et/ou de passages de débit de décharge (22), chacun desdits passages (22) étant préférentiellement aligné avec un ou plusieurs desdits échangeurs de chaleur (28).

15. Procédé de refroidissement de l'huile d'un circuit de lubrification et/ou de refroidissement d'une turbomachine axiale double-flux au moyen d'un échangeur de chaleur, la turbomachine comprenant un compresseur axial (42, 44), le compresseur étant traversé par un flux dit primaire (4) de la turbomachine; une paroi (26) entourant le compresseur (42, 44) et délimitant la surface interne d'un flux dit secondaire (6) de la turbomachine; un passage (22) apte à générer un débit de décharge (24) contrôlé depuis le flux primaire (4) dans le compresseur vers le flux secondaire (6), le passage débouchant dans la paroi (26) délimitant la surface interne du flux secondaire (6);
le procécé comprenant le fait de disposer l'échangeur de chaleur (28) dans le débit de décharge (24) du flux primaire ;
**caractérisée en ce que** le fait de disposer l'échangeur dé chaleur comprend le fait de le disposer dans le flux secondaire en aval de la jonction du passage de débit de décharge (22) avec la paroi (26) délimitant la surface interne du flux secondaire.

## Patentansprüche

1. Axiale Doppelstrom-Turbomaschine (2) mit:
einem axialen Kompressor (42, 44), wobei der Kompressor von einem so genannten Primärstrom (4) der Turbomaschine durchströmt wird;
einer Wandung (26), die den Kompressor (42, 44) umgibt und die innere Oberfläche eines so genannten Sekundärstroms (6) der Turbomaschine begrenzt;
einem Durchgang (22), der in der Lage ist, einen kontrollierten Abwurf-Volumenstrom (24) anhand des Primärstroms (4) im Kompressor in Richtung Sekundärstrom (6) zu erzeugen, wobei der Durchgang in der Wandung (26) mündet, die die innere Oberfläche des Sekundärstroms (6) begrenzt;
einem Schmier- und/oder Kühlkreislauf mit Öl für die Elemente der Turbomaschine;
einem Wärmetauscher (28), der dazu bestimmt ist, das Öl des Schmierkreislaufs zu kühlen und mindestens teilweise direkt im Abwurf-Volumenstrom (24) des Primärstroms angeordnet ist;
**dadurch gekennzeichnet, dass**:
der Wärmetauscher (28) im Sekundärstrom direkt stromabwärts der Verbindung des Durchgangs für den Abwurf-Volumenstrom (22) mit der Wandung (26) angeordnet ist, die die innere Oberfläche des Sekundärstroms begrenzt.

2. Axiale Doppelstrom-Turbomaschine nach dem vorigen Anspruch, **dadurch gekennzeichnet, dass** der Ausgang des Durchgangs für den Abwurf-Volumenstrom (22) im Verhältnis zu der Wandung (26), die die innere Oberfläche des Sekundärstroms begrenzt, in der Weise schräg angeordnet ist, dass die Hauptachse des genannten Durchgangs einen Winkel von weniger als 70° und vorzugsweise von 50° mit der genannten Wandung bildet.

3. Axiale Doppelstrom-Turbomaschine nach einem der vorangegangenen Ansprüche, **dadurch gekennzeichnet, dass** der Wärmetauscher vom Flächentyp ist, mit mindestens einer Wärmetauschoberfläche (29), die allgemein parallel zu der Wandung (26) verläuft, die die innere Oberfläche des Sekundärstroms begrenzt und flach auf oder mindestens teilweise in der Wandung (26) angeordnet ist, die die innere Oberfläche des Sekundärstroms begrenzt.

4. Axiale Doppelstrom-Turbomaschine nach dem vorangegangenen Anspruch, **dadurch gekennzeichnet, dass** der Wärmetauscher (28) mindestens teilweise in die Wandung (26) integriert ist, die die innere Oberfläche des Sekundärstroms begrenzt und dies in der Weise, dass sich seine Wärmetauschoberfläche (29) in Fluchtlinie mit der genannten Wandung (26) befindet.

5. Axiale Doppelstrom-Turbomaschine nach einem der Ansprüche 3 bis 4, **dadurch gekennzeichnet, dass** der Wärmetauscher (28) Mittel für die Lenkung (32) des Stroms beinhaltet, wobei die Mittel für die Lenkung vorzugsweise einen oder mehrere Kanäle mit der Wärmetauschoberfläche (29) des Wärmetauschers bilden.

6. Axiale Doppelstrom-Turbomaschine nach einem der voranstehenden Ansprüche, **dadurch gekennzeichnet, dass** die Mittel für die Lenkung des Stroms eine Leitwandung (32) beinhalten, die auf Abstand von der Wärmetauschoberfläche angeordnet ist, wobei die Lamellen (34) vorzugsweise zwischen der Wärmetauschoberfläche (29) und der Leitwandung (32) angeordnet sind.

7. Axiale Doppelstrom-Turbomaschine nach dem vorangegangenen Anspruch, **dadurch gekennzeichnet, dass** die Leitwandung (32) gegenüber dem Wärmetauscher (28) an der Vorderseite übersteht und teilweise im Ausgangsstrom des Durchgangs für den Abwurf-Volumenstrom (22) angeordnet ist, um mindestens einen Teil des Abwurf-Volumenstroms zur Wärmtauschoberfläche (29) des Wärmetauschers (28) zu lenken.

8. Axiale Doppelstrom-Turbomaschine nach einem der Ansprüche 6 und 7, **dadurch gekennzeichnet, dass** der Wärmetauscher (28), die Leitwandung (32) und die Wandung (26), die die innere Oberfläche des Sekundärstroms begrenzt, in der Weise angeordnet sind, dass sich die Leitwandung (32) in einer Fluchtlinie mit der Wandung (26) befindet, die die innere Oberfläche des Sekundärstroms begrenzt.

9. Axiale Doppelstrom-Turbomaschine nach dem vorangegangenen Anspruch, **dadurch gekennzeichnet, dass** die Wandung (26), die die innere Oberfläche des Sekundärstroms begrenzt, eine Vertiefung an der Stelle mit dem Wärmetauscher (26) aufweist, so dass sich die Leitwandung (32) außerhalb der Vertiefung in einer Fluchtlinie mit der Wandung (26) befindet, die die innere Oberfläche des Sekundärstroms begrenzt.

10. Axiale Doppelstrom-Turbomaschine nach einem der Ansprüche 6 bis 9, **dadurch gekennzeichnet, dass** die Leitwandung (32) gegenüber dem Wärmetauscher (28) an der Hinterseite hervorsteht.

11. Axiale Doppelstrom-Turbomaschine nach Anspruch 3, **dadurch gekennzeichnet, dass** der Wärmetauscher (28) mehrere Wärmetauschoberflächen beinhaltet, die übereinander und allgemein parallel zu der Wandung, die die innere Oberfläche des Sekundärstroms begrenzt, angeordnet sind.

12. Axiale Doppelstrom-Turbomaschine nach Anspruch 1, **dadurch gekennzeichnet, dass** der Wärmetauscher (28) vom Flächentyp ist, mit mindestens zwei gegenüberliegenden und parallelen Wärmetauschoberflächen, wobei der Wärmetauscher auf Abstand von der Wandung (26) angeordnet ist, die die innere Oberfläche des Sekundärstroms begrenzt.

13. Axiale Doppelstrom-Turbomaschine nach dem vorangegangenen Anspruch, **dadurch gekennzeichnet, dass** der Wärmetauscher (28) in Fluchtlinie und in der Verlängerung der Wandung (26) angeordnet ist, die die innere Oberfläche des Sekundärstroms begrenzt und dies in der Nähe der Vorderseite der Verbindung des Durchgangs für den Abwurf-Volumenstrom (22) mit der genannten Wandung (26), wobei die genannte Wandung an der Hinterseite der genannten Verbindung in der Weise abgesenkt ist, dass ein Durchgang für den Abwurf-Volumenstrom mit dem Wärmetauscher erzeugt wird.

14. Axiale Doppelstrom-Turbomaschine nach einem der vorangegangenen Ansprüche, **dadurch gekennzeichnet, dass** sie eine Mehrzahl von Wärmetauschern (28) und/oder Durchgängen für den Abwurf-Volumenstrom (22) besitzt, wobei jeder der genannten Durchgänge (22) vorzugweise eine Fluchtlinie mit einem oder mehreren der genannten Wärmetauscher (28) bildet.

15. Verfahren für das Kühlen des Öls eines Schmierkreislaufs und/oder das Kühlen einer axialen Doppelstrom-Turbomaschine anhand eines Wärmetauschers, wobei die Turbomaschine einen axialen Kompressor (42, 44) beinhaltet und der Kompressor von einem so genannten Primärstrom (4) der Turbomaschine durchströmt wird; eine Wandung (26), die den Kompressor (42, 44) umgibt und die innere Oberfläche eines so genannten Sekundärstroms (6) der Turbomaschine begrenzt; einen Durchgang (22), der in der Lage ist, einen kontrollierten Abwurf-Volumenstrom (24) anhand des Primärstroms (4) im Kompressor in Richtung auf den Sekundärstrom (6) zu erzeugen, wobei der Durchgang in der Wandung (26) mündet, die die innere Oberfläche des Sekundärstroms (6) begrenzt;
wobei das Verfahren die Tatsache beinhaltet, den Wärmetauscher (28) im Abwurf-Volumenstrom (24) des Primärstroms anzuordnen;
**dadurch gekennzeichnet, dass** die Tatsache, den Wärmetauscher anzuordnen die Tatsache beinhaltet, ihn im Sekundärstrom stromabwärts der Verbindung des Durchgangs des Abwurf-Volumenstroms (22) mit der Wandung (26), die die innere Oberfläche des Sekundärstroms begrenzt, anzuordnen.

## Claims

1. Double-flow axial turbomachine (2) comprising:
an axial compressor (42, 44), the compressor being traversed by a flow referred to as primary (4) of the turbomachine;
a wall (26) surrounding the compressor (42, 44) and delineating the internal surface of a flow referred to as secondary (6) of the turbomachine;
a passage (22) adapted to generate a discharge flow rate (24) controlled from the primary flow (4) in the compressor toward the secondary flow (6), the passage opening out into the wall (26) delineating the internal surface of the secondary flow (6);
an oil lubrication and/or cooling circuit for elements of the turbomachine;
a heat exchanger (28) adapted to cool the oil of the lubrication circuit and arranged at least partially directly in the discharge flow rate (24) of the primary flow;
**characterized in that**
the heat exchanger (28) is arranged in the secondary flow directly downstream of the junction of the passage of the discharge flow rate (22) with the wall (26) delineating the internal surface of the secondary flow.

2. Double-flow axial turbomachine according to the previous claim, **characterized in that** the exit of the passage of the discharge flow rate (22) is inclined with respect to the wall (26) delineating the internal surface of the secondary flow so that the main axis of said passage forms an angle of less than 70°, preferably 50°, with said wall.

3. Double-flow axial turbomachine according to one of the previous claims, **characterized in that** the heat exchanger is of the surface type with at least one heat exchange surface (29) generally parallel to the wall (26) delineating the internal surface of the secondary flow and is arranged flat on or at least partially in the wall (26) delineating the internal surface of the secondary flow.

4. Double-flow axial turbomachine according to the previous claim, **characterized in that** the heat exchanger (28) is at least partially integrated in the wall (26) delineating the internal surface of the secondary flow so that its exchange surface (29) is aligned with said wall (26).

5. Double-flow axial turbomachine according to one of claims 3 to 4, **characterized in that** the heat exchanger (28) comprises means (32) for guiding the flow, the guiding means forming preferably one or several channels with the exchange surface (29) of the heat exchanger.

6. Double-flow axial turbomachine according to the previous claim, **characterized in that** the means for guiding the flow comprise a guiding wall (32) arranged at a distance from the exchange surface (29) of the heat exchanger, fins (34) being preferably arranged between the exchange surface (29) and the guiding wall (32).

7. Double-flow axial turbomachine according to the previous claim, **characterized in that** the guiding wall (32) projects from the heat exchanger (28) on the upstream side and is partially arranged in the exit flow of the passage of the discharge flow rate (22) so as to guide at least a portion of the discharge flow rate toward the exchange surface (29) of the heat exchanger (28).

8. Double-flow axial turbomachine according to one of claims 6 and 7, **characterized in that** the heat exchanger (28), the guiding wall (32), and the wall (26) delineating the internal surface of the secondary flow are arranged so that the guiding wall (32) is aligned with the wall (26) delineating the internal surface of the secondary flow.

9. Double-flow axial turbomachine according to the previous claim, **characterized in that** the wall (26) delineating the internal surface of the secondary flow has a recess at the location of the heat exchanger (28) so that the guiding wall (32) is aligned with the wall (26) delineating the internal surface of the secondary flow outside the recess.

10. Double-flow axial turbomachine according to one of claims 6 to 9, **characterized in that** the guiding wall (32) projects from the heat exchanger (28) on the downstream side.

11. Double-flow axial turbomachine according to claim 3, **characterized in that** the heat exchanger (28) comprises several superposed heat exchange surfaces, generally parallel to the wall delineating the internal surface of the secondary flow.

12. Double-flow axial turbomachine according to claim 1, **characterized in that** the heat exchanger (28) is of the surface type with at least two opposite, parallel, heat exchange surfaces, the heat exchanger being arranged at a distance from the wall (26) delineating the internal surface of the secondary flow.

13. Double-flow axial turbomachine according to the previous claim, **characterized in that** the heat exchanger (28) is arranged in the alignment and the continuity of the wall (26) delineating the internal surface of the secondary flow in the vicinity of the upstream side of the junction of the passage of the discharge flow rate (22) with said wall (26), said wall being lowered on the downstream side of said junction so as to create a passage section for the discharge flow rate with the heat exchanger.

14. Double-flow axial turbomachine according to one of the previous claims, **characterized in that** it comprises a plurality of heat exchangers (28) and/or of passages of discharge flow rate (22), each of said passages (22) being preferably aligned with one or several of said heat exchangers (28).

15. Method for cooling oil of a lubrication and/or cooling circuit of a double-flow axial turbomachine by means of a heat exchanger, the turbomachine comprising an axial compressor (42, 44), the compressor being traversed by a flow referred to as primary (4) of the turbomachine; a wall (26) surrounding the compressor (42, 44) and delineating the internal surface of a flow referred to as secondary (6) of the turbomachine; a passage (22) adapted to generate a discharge flow rate (24) controlled from the primary flow (4) in the compressor toward the secondary flow (6), the passage opening out into the wall (26) delineating the internal surface of the secondary flow (6);
the method comprising the fact of placing the heat exchanger (28) in the discharge flow rate (24) of the primary flow;
**characterized in that** the fact of placing the heat exchanger comprises the fact of placing it in the secondary flow downstream of the junction of the passage of the discharge flow rate (22) with the wall (26) delineating the internal surface of the secondary flow.
